# EUROPEAN PATENT SPECIFICATION

(11) **EP 4 026 955 B1**
(45) Date of publication and mention of the grant of the patent: **09.12.2026**
(21) Application number: 20863764.5
(22) Date of filing: 10.09.2020
(51) Int. Cl.: E02F 9/20, B60L 50/60, B60L 50/51, B60L 1/00

(54) **POWER SUPPLY DEVICE OF ELECTRIC EXCAVATOR**
STROMVERSORGUNGSVORRICHTUNG EINES ELEKTRISCHEN BAGGERS
DISPOSITIF D'ALIMENTATION ÉLECTRIQUE D'UNE EXCAVATRICE ÉLECTRIQUE

(30) Priority: 10.09.2019 KR 20190112356
(43) Date of publication of application: 13.07.2022
(73) Proprietor: HD Construction Equipment Co., Ltd., Seongnam-si, Gyeonggi-do 13553 (KR)
(72) Inventor: SEO, Hyunjae, Ansan-si, Gyeonggi-do 15447 (KR)
(74) Representative: Isarpatent
(86) International application number: PCT/KR2020/012258
(87) International publication number: WO 2021/049893

(56) References cited:
- JP-A- 2007 224 585
- JP-A- 2008 308 881
- JP-A- 2012 232 724
- JP-A- 2014 193 763
- KR-A- 20150 038 169
- US-A1- 2015 144 414
- US-A1- 2016 003 266
- US-A1- 2017 043 823
- US-A1- 2018 282 968

## Description

### [Technical Field]

The present specification relates to a power supply device for an electric excavator.

### [Background Art]

In general, an excavator refers to a construction machine having various working functions such as excavation work for digging or reclaiming the ground during construction and civil engineering work, breaker work for changing soil or breaking bedrock, compactor work for compacting soil, and crusher work such as cutting.

The excavator is typically equipped with an engine such as a diesel engine in order to obtain driving power. The excavator operates a hydraulic pump by using power of the engine and supplies a working fluid, which is discharged from the hydraulic pump, to a hydraulic motor or a hydraulic actuator such as a hydraulic cylinder, thereby rotating a traveling crawler or tire or operating working parts such as a boom, an arm, and a bucket.

Since the well-known excavator is equipped with the engine such as a diesel engine, the excavator may freely work without restriction on work sites.

However, because light oil, which is fossil fuel, becomes depleted and causes air pollution, there is an acute need for environmentally friendly alternative energy. Further, the fossil fuel is expensive, and the excavator has distinct characteristics of heavy equipment and thus consumes a large amount of fuel, which causes an increase in operating costs. As a solution for solving the above-mentioned problems, an electric excavator using electrical energy has been proposed.

The electric excavator requires a method of improving efficiency of a battery capacity. In addition, because a battery is inevitably provided in a limited volume in the electric excavator, there is a need to optimize the battery capacity and improve efficiency.
KR 2015 0038169 A describes an electric construction machine (excavator) having a power supply device and an electric motor unit, the device comprising a battery unit, a power supply input section with charging ports, a power supply and distribution unit, and a controller that controls a power supply circuit.
JP 2007 224585 A describes a construction machine cooling system.
US 2015/0144414 A1 describes a harness routing structure for an electric vehicle.

### [Disclosure]

### [Technical Problem]

The present disclosure provides a power supply device for an electric excavator, which provides both high-speed charging and low-speed charging, so as to improve efficiency in using a battery.

### [Technical Solution]

The invention is set out in the appended set of claims.

The present invention provides a power supply device for an electric excavator, according to claim 1.

The first charging port may be a high-speed charging port, and the second charging port may be a low-speed charging port.

The first charging port may be disposed at a lateral side of a cabin of the excavator, and the second charging port may be disposed at a rear side of a cabin of the excavator.

The electric motor unit may include a first inverter and a first motor, and the first motor may be connected to a hydraulic pump.

The electric motor unit may further include a second inverter and a second motor, and the second motor may be connected to a turning motor.

The power supply device may further include: a fan motor; and a converter connected between the fan motor and the power supply unit.

The power supply unit may compare a sum of the amount of required power of the fan motor and the amount of required power of the electric motor unit with the amount of charging power of the OBC, the power supply unit may supply the charging power of the OBC and the power of the battery unit to the electric motor unit and the fan motor when the sum of both the amount of required power of the fan motor and the amount of required power of the electric motor unit is larger than the amount of charging power of the OBC, and the power supply unit may supply the charging power of the OBC to the electric motor unit and the fan motor and store, in the battery, the charging power of the OBC remaining after the supply of the charging power when the sum of the amount of required power of the fan motor and the amount of required power of the electric motor unit is equal to or smaller than the amount of charging power of the OBC.

An example of the present disclosure provides a power supply device for an electric excavator, the power supply device including: a power supply unit configured to supply power of a battery unit to an electric motor unit; a first charging port connected to the power supply unit and configured to supply first external power to the battery unit; an on-board charger (OBC) connected to the power supply unit and configured to convert alternating current into direct current when alternating current power is inputted; and a second charging port connected to the OBC and configured to supply second external power to the OBC, in which the first charging port is a high-speed charging port, and the second charging port is a low-speed charging port, in which the power supply unit compares the amount of required power of the electric motor unit with the amount of charging power of the OBC, in which the power supply unit supplies charging power of the OBC and power of the battery unit to the electric motor unit when the amount of required power is larger than the amount of charging power of the OBC, in which the power supply unit supplies the charging power of the OBC to the electric motor unit and stores, in the battery unit, the charging power of the OBC remaining after the supply of the charging power when the amount of required power is equal to or smaller than the amount of charging power of the OBC, in which the electric motor unit includes a first inverter, a second inverter, a first motor, and a second motor, and in which the first motor is connected to a hydraulic pump, and the second motor is connected to a turning motor.

### [Advantageous Effects]

According to the present disclosure, the high-speed charging or the low-speed charging can be selectively used to charge the electric excavator, as necessary, which makes it possible to improve efficiency in using the battery.

### [Description of Drawings]

FIG. 1 is a block diagram illustrating a configuration of a power supply device for an electric excavator according to an embodiment of the present disclosure.
FIG. 2A is a view illustrating a position of a first charging port of the electric excavator according to the embodiment of the present disclosure, and FIG. 2B is a view illustrating a position of a second charging port of the electric excavator according to the embodiment of the present disclosure.
FIG. 3 is a block diagram illustrating a configuration of a power supply device for an electric excavator according to another embodiment of the present disclosure.
FIG. 4 is a flowchart for explaining a power supply method of the power supply unit according to the present disclosure.

### [Best Mode]

Hereinafter, embodiments of the present application will be described in detail with reference to the accompanying drawings.

When describing the embodiments, a description of technical contents, which are well known in the technical field to which the present application pertains but are not directly related to the present application, will be omitted. This is to more clearly describe the subject matter of the present application without obscuring the subject matter by omitting any unnecessary description.

Similarly, in the accompanying drawings, some constituent elements are illustrated in an exaggerated or schematic form or are omitted. In addition, a size of each constituent element does not entirely reflect an actual size. Like reference numerals designate like or corresponding elements in the drawings.

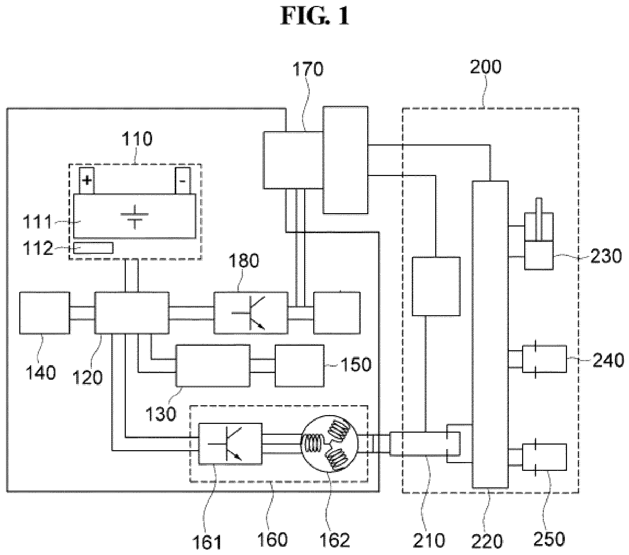

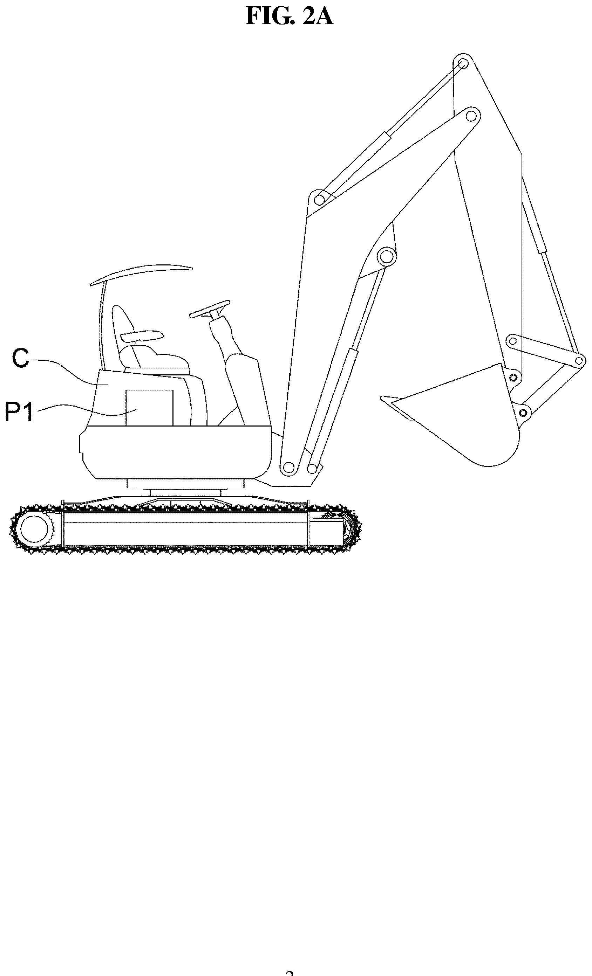

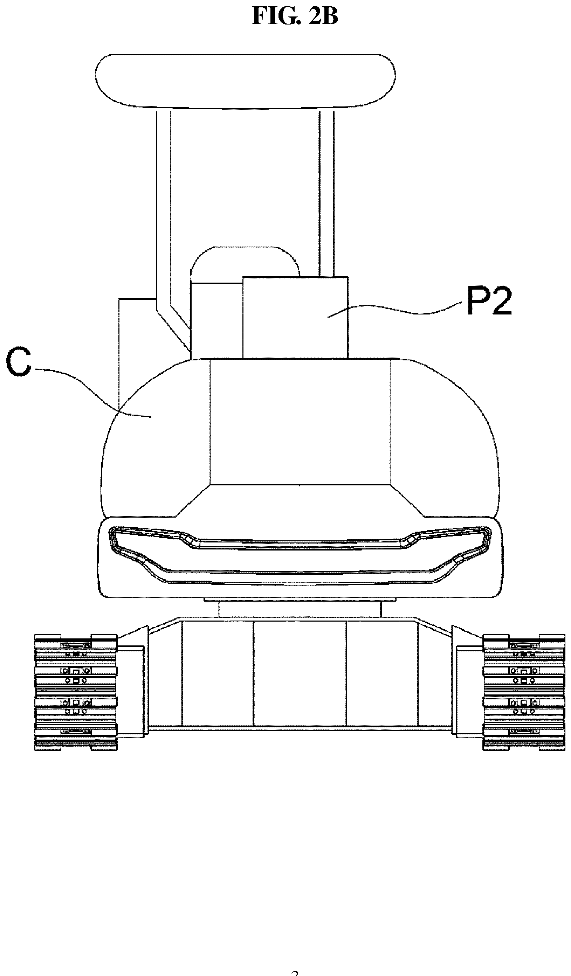

FIG. 1 is a block diagram illustrating a configuration of a power supply device for an electric excavator according to an embodiment of the present disclosure, FIG. 2A is a view illustrating a position of a first charging port of the electric excavator according to the embodiment of the present disclosure, and FIG. 2B is a view illustrating a position of a second charging port of the electric excavator according to the embodiment of the present disclosure.

As illustrated in FIG. 1, a power supply device for an electric excavator includes a battery unit 110, a power supply unit 120, an on-board charger (OBC) 130, a first charging port 140, a second charging port 150 and an electric motor unit 160, and the power supply device may further includes a fan motor 170, a converter 180 and a hydraulic system 200.

The battery unit 110 is used as a power source and may include a battery 111 charged by an external charging device C, and a battery management system (BMS) 112 configured to check for a state of charge of the battery.

For example, the battery 111 may be, but not limited to, a lithium-ion battery. For example, the lithium-ion battery has a capacity that enables the electric excavator to continuously perform high-load work for about 4 hours.

The battery unit 110 is connected to the power supply unit 120.

The BMS 112 may detect a power storage amount, i.e., electric potential by using various methods such as a method of estimating electric potential by detecting internal resistance that varies depending on a remaining capacity (state of charge (SOC)) and a temperature.

The power supply unit 120 includes a busbar, a relay, a fuse, a switch, and the like and has a plurality of charging ports. The respective ports of the power supply unit 120 are connected to the OBC 130, the first charging port 140, the second charging port 150, the electric motor unit 160 and the converter 180.

A power supply operation of the power supply unit 120 will be described below in detail.

The OBC 130 is connected between the power supply unit 120 and the second charging port 150. For example, the OBC 130 refers to a converter configured to convert alternating current, which enables low-speed charging, into direct current. The OBC 130 converts external power (e.g., power of 220 V and 380 V ac) into predetermined voltage (e.g., 48 V dc).

The first charging port 140 may be a high-speed charging port, and the second charging port 150 is a low-speed charging port. An external power source connected to the first charging port 140 outputs higher electric current than an external power source connected to the second charging port 150.

In addition, the BMS 112 checks whether the electric excavator is turned on. In a state in which the electric excavator is turned on, the BMS 112 cuts off a supply of power from the first charging port 140 to the power supply unit 120. To this end, the BMS 112 may be connected to others component of the electric excavator and transmit or receive signals to or from the components.

The electric excavator is charged when the external power source and the second charging port 150 are connected by means of a cable, and the electric excavator may work in a state in which the cable is connected during the charging process. Therefore, as illustrated in FIG. 2B, the second charging port 150 may be disposed at a rear side P2 of an excavator cabin C to minimize a situation in which the cable hinders the operation of the excavator. In this case, the operations of the excavator may include a turning operation.

The electric excavator consistently may supply energy to the battery by performing the low-speed charging while working, thereby increasing working time.

In contrast, since the first charging port 140 performs the charging in the state in which the electric excavator is turned off, the position of the first charging port 140 is less restricted than that of the second charging port 150. Therefore, the first charging port 140 may be disposed at a lateral side P1 of the cabin C of the excavator, which is a position with which the user is familiar, e.g., at which a refueling port was disposed in the related art.

The high-speed charging supplies higher power than the low-speed charging. Therefore, when a position (height) at which the first charging port 140 is disposed is higher than a position at which a charging port of an external charger is disposed, a distance from the external charger increases, and the cable is lengthened. A thickness of the cable needs to increase when the cable is lengthened. Therefore, the first charging port 140 may be disposed at a height at which a connection length between the first charging port 140 and the external charger is minimized. For example, the position (height) at which the first charging port 140 is disposed may be a height of a driver seat. In this case, the height means a length perpendicular to the ground surface.

The electric motor unit 160 is connected between the power supply unit 120 and the hydraulic system and includes an inverter 161 and a motor 162. The electric motor unit 160 is supplied with power from the power supply unit 120 through the inverter 161 and operates the motor 162. The inverter 161 converts direct current power, which is supplied from the power supply unit 120, into alternating current power. Therefore, the motor 162 is supplied with power in the form of alternating current power through the inverter 161.

The hydraulic system 200 may include a hydraulic pump 210, a hydraulic control valve 220, one or more cylinders 230 configured to operate the boom, the arm, the bucket, and the like, a traveling motor 240 for allowing the excavator to travel and a turning motor 250 configured to operate a turning driver.

The hydraulic control valve 220 is connected to the hydraulic pump 210. A working fluid discharged by the hydraulic pump 210 selectively operates the one or more cylinder 230, the traveling motor 240 and the turning motor 250 depending on the control order of the hydraulic control valve 220.

For example, the one or more cylinders 230 include a boom cylinder, an arm cylinder, a bucket cylinder, and the like.

The fan motor 170 is connected to the power supply unit 120 through the converter 180 and supplied with power from the power supply unit 120. The fan motor 170 may operate depending on a temperature of the working fluid. For example, the fan motor 170 may be designed such that the fan motor 170 operates a maximum RPM (revolution per minute) when the temperature of the working fluid is equal to or higher than a preset temperature (e.g., 60°C). In another modified example, the fan motor 170 may be designed such that the RPM of the fan motor 170 is linearly controlled depending on the temperature of the working fluid.

The electric excavator according to the embodiment of the present disclosure has both the high-speed charging port and the low-speed charging port and may efficiently charge the battery. For example, the electric excavator may be charged by the high-speed charging within a short period of time such as lunch time while the electric excavator idles during the work process, and the electric excavator may be charged by the low-speed charging after work. In addition, when the battery is quickly discharged while the electric excavator performs high-load work, the electric excavator may work while being charged by the low-speed charging. As described above, the operator may selectively use the high-speed charging or the low-speed charging, as necessary. As a result, the electric excavator can work for a long period of time by using the battery having a limited capacity. Therefore, the efficiency and continuity in using the excavator are improved.

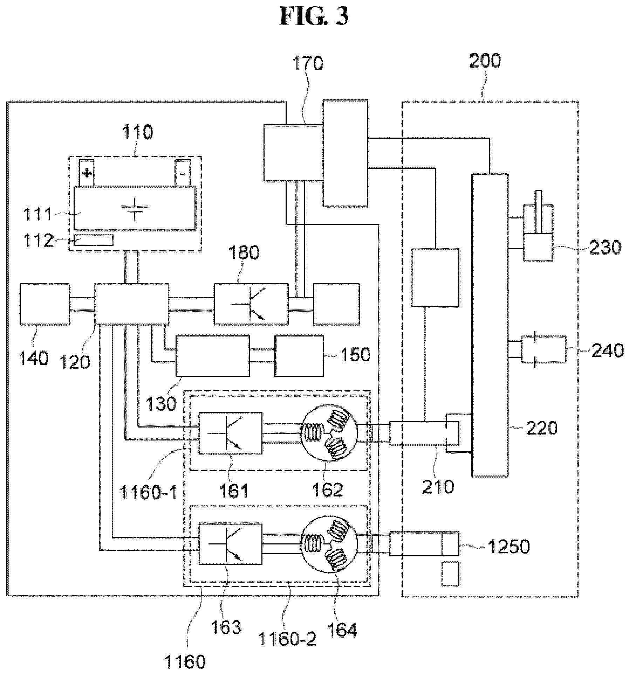

FIG. 3 is a block diagram illustrating a configuration of a power supply device for an electric excavator according to another embodiment of the present disclosure. Like reference numerals indicate the components identical to the components illustrated in FIG. 1, the common description will be omitted or made briefly.

Referring to FIG. 3, a power supply device for an electric excavator according to an example of the present disclosure may include a battery unit 110, a power supply unit 120, an on-board charger (OBC) 130, a first charging port 140, a second charging port 150 and an electric motor unit 1160, and the power supply device may further includes a fan motor 170, a converter 180 and a hydraulic system 1200.

The battery unit 110 is used as a power source and may include a battery 111 charged by an external charging device C, and a battery management system (BMS) 112 configured to check for a state of charge of the battery.

The battery unit 110 is connected to the power supply unit 120.

The power supply unit 120 includes a plurality of charging ports. The respective ports are connected to the OBC 130, the first charging port 140, the second charging port 150, the electric motor unit 1160 and the converter 180.

A power supply operation of the power supply unit 120 will be described below in detail.

The OBC 130 is connected between the power supply unit 120 and the second charging port 150.

The electric motor unit 1160 is connected between the power supply unit 120 and the hydraulic system 1200 and includes a first electric motor unit 1160-1 including a first inverter 161 and a first motor 162 and a second electric motor unit 1160-2 including a second inverter 163 and a second motor 164.

The first electric motor unit 1160-1 is supplied with power from the power supply unit 120 through the first inverter 161 and operates the first motor 162. The first inverter 161 converts direct current power, which is supplied from the power supply unit 120, into alternating current power. Therefore, the first motor 162 is supplied with power in the form of alternating current power through the first inverter 161.

The hydraulic system 1200 may include a hydraulic pump 210, a hydraulic control valve 220, one or more cylinders 230 and a traveling motor 240.

The hydraulic control valve 220 is connected to the hydraulic pump 210. A working fluid discharged by the hydraulic pump 210 selectively operates the one or more cylinder 230 and the traveling motor 240 depending on the control order of the hydraulic control valve 220.

For example, the one or more cylinders 230 include a boom cylinder, an arm cylinder, a bucket cylinder, and the like.

The second electric motor unit 1160-2 is supplied with power from the power supply unit 120 through the second inverter 163 and operates the second motor 164. The second inverter 163 converts direct current power, which is supplied from the power supply unit 120, into alternating current power. Therefore, the second motor 164 is supplied with power in the form of alternating current power through the second inverter 163.

The second motor 164 is connected to a turning motor 1250.

According to another embodiment of the present disclosure described above, the electric motor unit 1160 includes the first motor 162 connected to the hydraulic pump 210 and the second motor 164 connected to the turning motor 1250. Therefore, in comparison with the first embodiment, maximum required power of the hydraulic pump 210 may be reduced, which makes it possible to lower the specifications of the hydraulic pump 210. In addition, since the maximum required power of the hydraulic pump 210 may be reduced, the battery capacity may be reduced.

The fan motor 170 is connected to the power supply unit 120 through the converter 180 and supplied with power from the power supply unit 120.

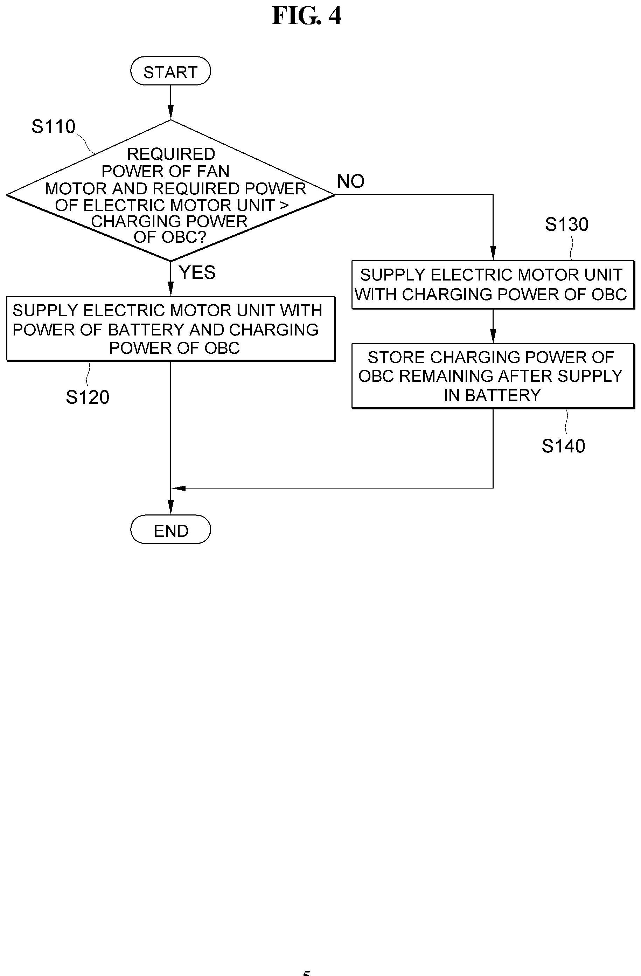

FIG. 4 is a flowchart for explaining a power supply method of the power supply unit according to the present disclosure.

The power supply unit 120 compares the amount of required power of the fan motor 170 and the amount of required power of the electric motor unit 160 or 1160 with the amount of charging power of the OBC 130 (S110).

When the comparison result indicates that the amount of required power of the fan motor 170 and the amount of required power of the electric motor unit 160 or 1160 are larger than the amount of charging power of the OBC 130, charging power of the OBC 130 and power of the battery are supplied to the electric motor unit 160 or 1160 (S120).

When the comparison result indicates that the amount of required power of the fan motor 170 and the amount of required power of the electric motor unit 160 or 1160 are equal to or smaller than the amount of charging power of the OBC 130, the charging power of the OBC 130 is supplied to the fan motor 170 and the electric motor unit 160 or 1160 (S130).

The remaining charging power of the OBC 130, which remains after the charging power of the OBC 130 is supplied to the required power of the fan motor 170 and the electric motor unit 160 or 1160, is stored in the battery unit 110.

The embodiments disclosed in the present specification have been described above with reference to the accompanying drawings. The embodiments illustrated in the respective drawings should not be interpreted as being restrictive, and some components may be combined with one another by those skilled in the art, who understand the contents disclosed in the present specification. It can be interpreted that some components can be omitted.

Here, terms or words used in the present specification and the claims should not be interpreted as being limited to a general or dictionary meaning.

It should be appreciated that various modified examples capable of substituting the embodiments may be made at the time of filing the present application.

### [Industrial Applicability]

The power supply device for an electric excavator according to the present disclosure improves efficiency in using the battery, thereby improving technologies in the fields of excavators.

## Claims

1. A power supply device for an electric excavator, the power supply device comprising:
a battery unit (110) including a battery (111) charged by an external charging device (C) and a battery management system, BMS, (112) configured to check for a state of charge of the battery (111);
an electric motor unit (160);
a power supply unit (120) configured to supply power of the battery unit (110) to the electric motor unit (160);
a first charging port (140) connected to the power supply unit (120) and configured to supply first external power to the battery unit (110);
an on-board charger, OBC, (130) connected to the power supply unit (120) and configured to convert alternating current into direct current when alternating current power is inputted; and
a second charging port (150) connected to the OBC (130) and configured to supply second external power to the OBC (130),
wherein the power supply unit (120) is configured to supply charging power of the OBC (130) or supply the charging power of the OBC (130) and power of the battery unit (110) to the electric motor unit (160) on the basis of an amount of required power of the electric motor unit (160) and an amount of charging power of the OBC (130),
wherein the OBC (130) is connected between the power supply unit (120) and the second charging port (150),
wherein the BMS (112) is configured to check whether the electric excavator is turned on, and to cut off a supply of power from the first charging port (140) into the power supply unit (120) in a state in which the electric excavator is turned on,
wherein the power supply unit (120) is configured to compare the amount of required power of the electric motor unit (160) with the amount of charging power of the OBC (130),
wherein, if the amount of required power is larger than the amount of charging power of the OBC (130), the power supply unit (120) is configured to supply the charging power of the OBC (130) and the power of the battery unit (110) to the electric motor unit (160), and
wherein, if the amount of required power is equal to or smaller than the amount of charging power of the OBC (130), the power supply unit (120) is configured to supply the charging power of the OBC (130) to the electric motor unit (160) and store, in the battery unit (110), the charging power of the OBC (130) remaining after the supply of the charging power, when the second charging port (150) is connected to an external power source by means of a cable, which enables the electric excavator to
work in a state in which the cable is connected during the charging process.

2. The power supply device of claim 1, wherein the first charging port (140) is a high-speed charging port.

3. The power supply device of claim 1, wherein the second charging port (150) is a low-speed charging port.

4. The power supply device of claim 1, wherein the first charging port (140) is disposed at a lateral side (P1) of a cabin (C) of the excavator.

5. The power supply device of claim 1, wherein the second charging port (150) is disposed at a rear side (P2) of a cabin (C) of the excavator.

6. The power supply device of claim 1, wherein the electric motor unit (160) comprises a first inverter (161) and a first motor (162), and the first motor (162) is connected to a hydraulic pump (210).

7. The power supply device of claim 6, further comprising:
a fan motor (170); and
a converter (180) connected between the fan motor (170) and the power supply unit (120),
wherein the power supply unit (120) is configured to compare a sum of the amount of required power of the fan motor (170) and the amount of required power of the electric motor unit (160) with the amount of charging power of the OBC (130),
wherein the power supply unit (120) is configured to supply the charging power of the OBC (130) and the power of the battery unit (110) to the electric motor unit (160) and the fan motor (170) when the sum of both the amount of required power of the fan motor (170) and the amount of required power of the electric motor unit (160) is larger than the amount of charging power of the OBC (130), and
wherein the power supply unit (120) is configured to supply the charging power of the OBC (130) to the electric motor unit (160) and the fan motor (170) and store, in the battery unit (110), the charging power of the OBC (130) remaining after the supply of the charging power when the sum of the amount of required power of the fan motor (170) and the amount of required power of the electric motor unit (160) is equal to or smaller than the amount of charging power of the OBC (130).

## Patentansprüche

1. Stromversorgungsvorrichtung für einen elektrischen Bagger, wobei die Stromversorgungsvorrichtung umfasst:
eine Batterieeinheit (110), aufweisend eine Batterie (111), die durch eine externe Ladevorrichtung (C) geladen wird, und ein Batteriemanagementsystem (BMS) (112), das dazu eingerichtet ist, den Ladezustand der Batterie (111) zu überprüfen;
eine Elektromotoreinheit (160);
eine Stromversorgungseinheit (120), die dazu eingerichtet ist, der Elektromotoreinheit (160) Leistung aus der Batterieeinheit (110) zuzuführen;
einen ersten Ladeanschluss (140), der mit der Stromversorgungseinheit (120) verbunden ist und dazu eingerichtet ist, der Batterieeinheit (110) einen ersten externen Strom zuzuführen;
eine bordeigene Ladevorrichtung (OBC) (130), die mit der Stromversorgungseinheit (120) verbunden ist und dazu eingerichtet ist, Wechselstrom in Gleichstrom umzuwandeln, wenn Wechselstrom eingespeist wird; und
einen zweiten Ladeanschluss (150), der mit der OBC (130) verbunden ist und dazu eingerichtet ist, dem OBC (130) einen zweiten externen Strom zuzuführen,
wobei die Stromversorgungseinheit (120) dazu eingerichtet ist, der Elektromotoreinheit (160) auf der Grundlage eines Betrages an benötigter Leistung der Elektromotoreinheit (160) und eines Betrages an Ladeleistung der OBC (130) Ladeleistung der OBC (130) zuzuführen oder die Ladeleistung der OBC (130) und Leistung der Batterieeinheit (110) zuzuführen,
wobei die OBC (130) zwischen der Stromversorgungseinheit (120) und dem zweiten Ladeanschluss (150) verbunden ist,
wobei das BMS (112) dazu eingerichtet ist zu überprüfen, ob der Elektrobagger eingeschaltet ist, und eine Zufuhr von Strom von dem ersten Ladeanschluss (140) in die Stromversorgungseinheit (120) in einem Zustand zu trennen, in dem der Elektrobagger eingeschaltet ist,
wobei die Stromversorgungseinheit (120) dazu eingerichtet ist, den Betrag an benötigter Leistung der Elektromotoreinheit (160) mit dem Betrag an Ladeleistung der OBC (130) zu vergleichen,
wobei, falls der Betrag an benötigter Leistung größer ist als der Betrag an Ladeleistung der OBC (130), die Stromversorgungseinheit (120) dazu eingerichtet ist, der Elektromotoreinheit (160) die Ladeleistung der OBC (130) und die Leistung der Batterieeinheit (110) zuzuführen, und
wobei, falls der Betrag an benötigter Leistung gleich dem oder kleiner als der Betrag an Ladeleistung der OBC (130) ist, die Stromversorgungseinheit (120) dazu eingerichtet ist, der Elektromotoreinheit (160) den Betrag an Ladeleistung der OBC (130) zuzuführen und die nach dem Zuführen der Ladeleistung verbleibende Ladeleistung der OBC (130) in der Batterieeinheit (110) zu speichern, wenn der zweite Ladeanschluss (150) mittels eines Kabels mit einer externen Stromquelle verbunden ist, was den elektrischen Bagger in die Lage versetzt, in einem Zustand zu arbeiten, in dem das Kabel während des Ladeprozesses verbunden ist.

2. Stromversorgungsvorrichtung nach Anspruch 1, wobei der erste Ladeanschluss (140) ein Schnellladeanschluss ist.

3. Stromversorgungsvorrichtung nach Anspruch 1, wobei der zweite Ladeanschluss (150) ein Langsamladeanschluss ist.

4. Stromversorgungsvorrichtung nach Anspruch 1, wobei der erste Ladeanschluss (140) an einer lateralen Seite (P1) einer Kabine (C) des Baggers angeordnet ist.

5. Stromversorgungsvorrichtung nach Anspruch 1, wobei der zweite Ladeanschluss (150) an einer Rückseite (P2) einer Kabine (C) des Baggers angeordnet ist.

6. Stromversorgungsvorrichtung nach Anspruch 1, wobei die Elektromotoreinheit (160) einen ersten Wechselrichter (161) und einen ersten Motor (162) umfasst und der erste Motor (162) mit einer Hydraulikpumpe (210) verbunden ist.

7. Stromversorgungsvorrichtung nach Anspruch 6, des Weiteren umfassend:
einen Lüftermotor (170); und
einen Wandler (180), der zwischen dem Lüftermotor (170) und der Stromversorgungseinheit (120) verbunden ist,
wobei die Stromversorgungseinheit (120) dazu eingerichtet ist, eine Summe aus dem Betrag an benötigter Leistung des Lüftermotors (170) und dem Betrag an benötigter Leistung der Elektromotoreinheit (160) mit dem Betrag an Ladeleistung der OBC (130) zu vergleichen,
wobei die Stromversorgungseinheit (120) dazu eingerichtet ist, der Elektromotoreinheit (160) und dem Lüftermotor (170) die Ladeleistung der OBC (130) und die Leistung der Batterieeinheit (110) zuzuführen, wenn die Summe sowohl aus dem Betrag an benötigter Leistung des Lüftermotors (170) als auch dem Betrag an benötigter Leistung der Elektromotoreinheit (160) größer ist als der Betrag an Ladeleistung der OBC (130), und
wobei die Stromversorgungseinheit (120) dazu eingerichtet ist, der Elektromotoreinheit (160) und dem Lüftermotor (170) die Ladeleistung der OBC (130) zuzuführen und die nach dem Zuführen der Ladeleistung verbleibende Ladeleistung der OBC (130) in der Batterieeinheit (110) zu speichern, wenn die Summe aus dem Betrag an benötigter Leistung des Lüftermotors (170) und dem Betrag an benötigter Leistung der Elektromotoreinheit (160) gleich dem oder kleiner als der Betrag an Ladeleistung der OBC (130) ist.

## Revendications

1. Dispositif d'alimentation électrique pour une pelleteuse électrique, le dispositif d'alimentation comprenant :
une unité de batterie (110) comportant une batterie (111) chargée par un dispositif de charge externe (C) et un système de gestion de batterie (BMS) (112) configuré pour vérifier un état de charge de la batterie (111) ;
une unité de moteur électrique (160) ;
une unité d'alimentation électrique (120) configurée pour fournir de la puissance de l'unité de batterie (110) à l'unité de moteur électrique (160) ;
un premier port de charge (140) connecté à l'unité d'alimentation électrique (120) et configuré pour fournir une première alimentation externe à l'unité de batterie (110) ;
un chargeur embarqué (OBC) (130) connecté à l'unité d'alimentation électrique (120) et configuré pour convertir un courant alternatif en courant continu lorsqu'une alimentation en courant alternatif est fournie ; et
un deuxième port de charge (150) connecté à l'OBC (130) et configuré pour fournir une deuxième alimentation externe à l'OBC (130),
dans lequel l'unité d'alimentation électrique (120) est configurée pour fournir la puissance de charge de l'OBC (130) ou pour fournir la puissance de charge de l'OBC (130) et la puissance de l'unité de batterie (110) à l'unité de moteur électrique (160) en fonction d'une quantité de puissance requise par l'unité de moteur électrique (160) et d'une quantité de puissance de charge de l'OBC (130),
dans lequel l'OBC (130) est connecté entre l'unité d'alimentation électrique (120) et le deuxième port de charge (150),
dans lequel le BMS (112) est configuré pour vérifier si la pelleteuse électrique est en marche et pour couper l'alimentation électrique provenant du premier port de charge (140) vers l'unité d'alimentation électrique (120) dans un état où la pelleteuse électrique est en marche,
dans lequel l'unité d'alimentation électrique (120) est configurée pour comparer la quantité de puissance requise par l'unité de moteur électrique (160) à la quantité de puissance de charge de l'OBC (130),
dans lequel, si la quantité de puissance requise est supérieure à la quantité de puissance de charge de l'OBC (130), l'unité d'alimentation électrique (120) est configurée pour fournir à l'unité de moteur électrique (160) la puissance de charge de l'OBC (130) et la puissance de l'unité de batterie (110), et
dans lequel, si la quantité de puissance requise est égale ou inférieure à la quantité de puissance de charge de l'OBC (130), l'unité d'alimentation électrique (120) est configurée pour fournir la puissance de charge de l'OBC (130) à l'unité de moteur électrique (160) et pour stocker, dans l'unité de batterie (110), la puissance de charge de l'OBC (130) restante après la fourniture de la puissance de charge, lorsque le deuxième port de charge (150) est connecté à une source d'alimentation externe au moyen d'un câble qui permet à la pelleteuse électrique de fonctionner dans un état où le câble est connecté pendant le processus de charge.

2. Dispositif d'alimentation électrique selon la revendication 1, dans lequel le premier port de charge (140) est un port de charge rapide.

3. Dispositif d'alimentation électrique selon la revendication 1, dans lequel le deuxième port de charge (150) est un port de charge lente.

4. Dispositif d'alimentation électrique selon la revendication 1, dans lequel le premier port de charge (140) est disposé sur un côté latéral (P1) d'une cabine (C) de la pelleteuse.

5. Dispositif d'alimentation électrique selon la revendication 1, dans lequel le deuxième port de charge (150) est disposé sur un côté arrière (P2) d'une cabine (C) de la pelleteuse.

6. Dispositif d'alimentation électrique selon la revendication 1, dans lequel l'unité de moteur électrique (160) comprend un premier onduleur (161) et un premier moteur (162), et le premier moteur (162) est connecté à une pompe hydraulique (210).

7. Dispositif d'alimentation électrique selon la revendication 6, comprenant en outre :
un moteur de ventilateur (170) ; et
un convertisseur (180) connecté entre le moteur de ventilateur (170) et l'unité d'alimentation électrique (120),
dans lequel l'unité d'alimentation électrique (120) est configurée pour comparer une somme de la quantité de puissance requise par le moteur de ventilateur (170) et de la quantité de puissance requise par l'unité de moteur électrique (160) à la quantité de puissance de charge de l'OBC (130),
dans lequel l'unité d'alimentation électrique (120) est configurée pour fournir la puissance de charge de l'OBC (130) et la puissance de l'unité de batterie (110) à l'unité de moteur électrique (160) et au moteur de ventilateur (170) lorsque la somme de la quantité de puissance requise par le moteur de ventilateur (170) et de la quantité de puissance requise par l'unité de moteur électrique (160) est supérieure à la puissance de charge du convertisseur de l'OBC (130), et
dans lequel l'unité d'alimentation électrique (120) est configurée pour fournir la puissance de charge de l'OBC (130) à l'unité de moteur électrique (160) et au moteur de ventilateur (170) et pour stocker, dans l'unité de batterie (110), la puissance de charge de l'OBC (130) restante après la fourniture de la puissance de charge lorsque la somme de la quantité de puissance requise par le moteur du ventilateur (170) et de la quantité de puissance requise par l'unité de moteur électrique (160) est égale ou inférieure à la puissance de charge de l'OBC (130).
